# EUROPEAN PATENT APPLICATION

(11) **EP 2 557 669 A2**
(43) Date of publication of application: **13.02.2013**
(21) Application number: 12174979.0
(22) Date of filing: 04.07.2012
(51) Int. Cl.: H02M 1/00

(54) **Filter circuit for a multi-phase AC input**

(30) Priority: 09.08.2011 US 201113206267
(71) Applicant: Hamilton Sundstrand Corporation, Windsor Locks, CT 06096-1010 (US)
(72) Inventor: Rozman, Gregory I., Rockford, IL Illinois 61114 (US); Dulcos, Thomas A., Suffield, CT Connecticut 06078 (US); James, Duane A., Middletown, CT Connecticut 06457 (US)
(74) Representative: Hughes, Andrea Michelle

(57) **Abstract**

A filter circuit is employed to filter undesirable harmonics in a multi-phase AC input and provide damping for oscillations associated with the filter circuit. The filter circuit includes a damping circuit connected between phases of the multi-phase AC input. The damping circuit including a rectifier for rectifying harmonics in the multi-phase AC input and a single damping resistor connected across the rectifier.

## Description

### STATEMENT OF GOVERNMENT INTEREST

This invention was made with government support under N65540-08-D-0017 DO 0001 awarded by the United States Navy. The government has certain rights in the invention.

### BACKGROUND

The present invention is related to filter circuits, and in particular to filter circuits for multi-phase alternating current (AC) inputs.

Filter circuits are commonly employed with respect to multi-phase AC inputs to filter undesirable AC harmonics associated with the multi-phase AC input and provide damping of LC filter. For example, filter circuits are commonly employed with respect to active rectifiers, which include solid-state devices that are selectively turned On and Off to convert a multi-phase AC input to a direct current (DC) output. However, undesirable oscillations (i.e., harmonics) are generated by turning the solid-state devices On and Off rapidly. To minimize the effect of these undesirable harmonics, a filter circuit is placed at the input of the active rectifier to filter the harmonics. An underdamped filter circuit may resonate creating undesirable oscillations (ringing) in the AC input current. Therefore, most filter circuits require damping to minimize undesirable oscillations in the AC input current.

### SUMMARY

A filter circuit is employed to filter undesirable harmonics in a multi-phase AC input and provide damping to minimize undesirable ringing of the filter circuit. The filter circuit includes a damping circuit connected between phases of the multi-phase AC input. The damping circuit including a rectifier for rectifying harmonics in the multi-phase AC input and a single damping resistor connected across the rectifier to provide damping of the filter circuit.

### BRIEF DESCRIPTION OF THE DRAWINGS

FIG. 1 is a circuit diagram of a power conversion system that includes a filter circuit and an active rectifier as known in the prior art.

FIG. 2 is a circuit diagram of a power conversion system that includes a filter circuit and an active rectifier according to an embodiment of the present invention.

FIG. 3 is a circuit diagram of a power conversion system that includes a filter circuit and an active rectifier according to another embodiment of the present invention.

### DETAILED DESCRIPTION

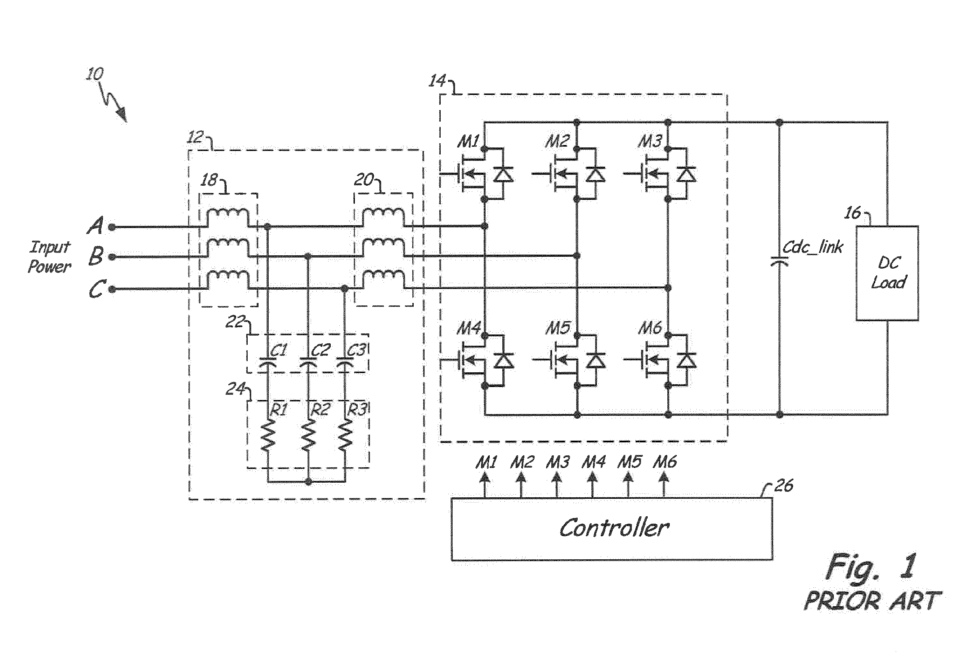

FIG. 1 is a circuit diagram of power conversion system 10 that includes a filter circuit and an active rectifier as known in the prior art. Power conversion system 10 includes filter circuit 12 and active rectifier 14, which acts to convert a three-phase alternating current (AC) input (labeled 'A', 'B', 'C') to a direct current (DC) output that is supplied to DC load 16 via DC link capacitor C_{dc_link}. Filter circuit 12 includes filter inductor circuit 18, boost inductor circuit 20, and filter capacitor circuit 22, arranged as an L-C-L network. Damping resistor circuit 24 dampens undesirable oscillations on the AC input caused by the L-C-L network that includes filter inductor circuit 18, boost inductor circuit 20 and filter capacitor circuit 22. Active rectifier 14 includes solid-state switches (e.g., metal-oxide semiconductor field-effect transistors (MOSFETs)) M1, M2, M3, M4, M5 and M6. Controller 26 provides control signals to selectively turn solid-states M1-M6 On and Off to regulate/control the AC-to-DC power conversion.

Filter circuit 12 receives the three-phase AC input. In the embodiment shown in FIG. 1, filter circuit 12 employs a L-C-L filter design, in which filter inductor circuit 18 is connected in series with boost inductor circuit 20, with filter capacitor circuit 22 connected at a node located between filter inductor circuit 18 and boost inductors 20. The combination of inductive and capacitive elements acts to filter out undesirable harmonics created by switching On and Off solid-state switches M1-M6. In addition, damping resistor circuit 24 is connected to filter capacitor circuit 22 to dampen ringing of the L-C-L network included in filter circuit 12. In the prior art embodiment, for each phase of AC input power, a capacitor and resistor are connected in series with one another (e.g., phase A is connected to filter capacitor C1 and damping resistor R1, phase B is connected to filter capacitor C2 and damping resistor R2, and phase C is connected to filter capacitor C3 and damping resistor R3). Each damping resistor R1, R2, R3 is connected to a common node, such that a circuit path is created between respective phases of the AC inputs including at least two damping resistors between each phase,

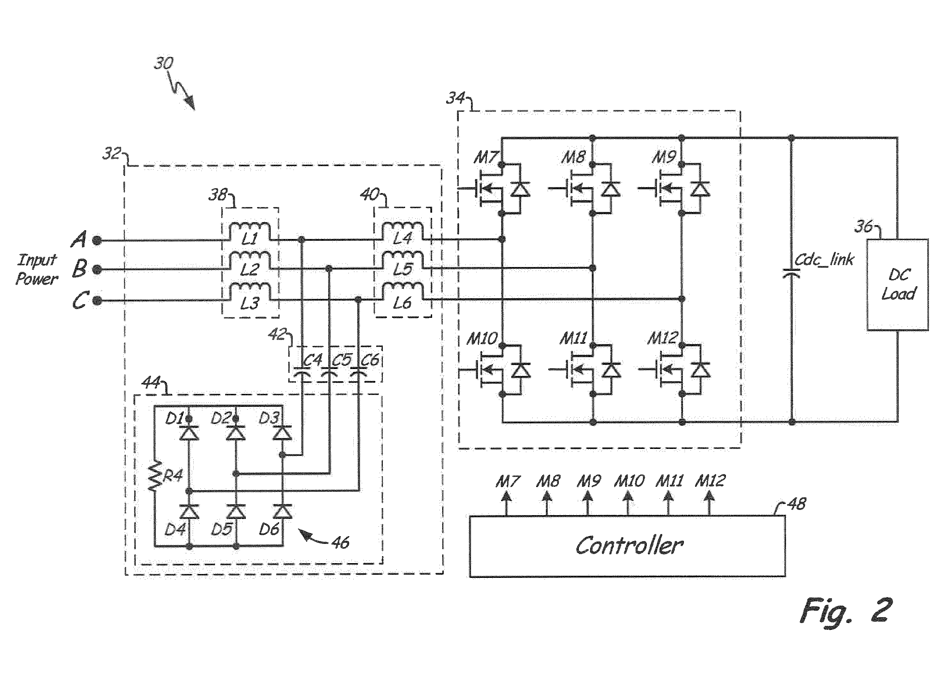

FIG. 2 is a circuit diagram of power conversion system 30 that includes filter circuit 32 and active rectifier 34 connected to convert a three-phase AC input (labeled 'A', 'B', and 'C') to a DC output that is provided to DC load 36 via DC link capacitor C_{dc_link}, Filter circuit 32 includes filter inductor circuit 38, boost inductor circuit 40, filter capacitor circuit 42 and damping resistor circuit 44. Active rectifier 34 once again includes a plurality of solid-state switching devices M7, M8, M9, M10, M11 and M12, selectively turned On and Off by controller 48 to provided the desired AC-to-DC power conversion.

Filter circuit 32 acts to filter oscillations generated by active rectifier 34 and provide damping to minimize ringing due to the L-C-L network included in filter circuit 32. In the embodiment shown in FIG. 2, filter circuit 32 is implemented in a L-C-L topology, in which inductors L1, L2, L3 included in filter inductor circuit 38 are connected in series with inductors L4, L5, L6, respectively, of boost inductor circuit 40. Capacitors C4, C5, C6 of filter capacitor circuit 42 are connected to a node between filter inductor circuit 38 and boost inductor circuit 40. In other embodiments, other well-known filter topologies may be employed.

In the embodiment shown in FIG. 2, damping resistor circuit 44 includes damping resistor R4 and rectifier circuit 46, which includes diodes D1 D2, D3, D4, D5, and D6. With respect to each phase of AC input provided via capacitors C4, C5, C6, rectifier circuit 46 includes a pair of diodes that rectify harmonics associated with the AC input to a DC output that is provided across damping resistor R4. For example, diodes D3 and D6 are connected via capacitor C4 to phase A of the AC input, at a node located between inductor L1 of filter inductor circuit 38 and inductor L4 of boost inductor circuit 40. Similarly, diodes D2 and D5 are connected via capacitor C5 to phase B of the AC input at a node located between inductor L2 of filter inductor circuit 38 and inductor L5 of boost inductor circuit 40, and diodes D1 and D4 are connected via capacitor C6 to phase C of the AC input at a node located between inductor L3 of filter inductor circuit 38 and inductor L6 of boost inductor circuit 40. Harmonics generated on each phase of the AC input are provided via capacitors C4, C5, C6 to the respective diode pair of rectifier circuit 46. The rectified (i.e., DC output) of rectifier circuit 46 is provided across damping resistor R4 to dampen the undesirable oscillations.

A benefit of the embodiment shown in FIG. 2 is that a single damping resistor may be employed, rather than a separate damping resistor with respect to each phase of the AC input. Decreasing the number of damping resistors employed in the damping resistor circuit reduces the size and weight of the circuit, without detrimentally affecting performance of filter circuit 32 in filtering and dampening undesirable harmonics.

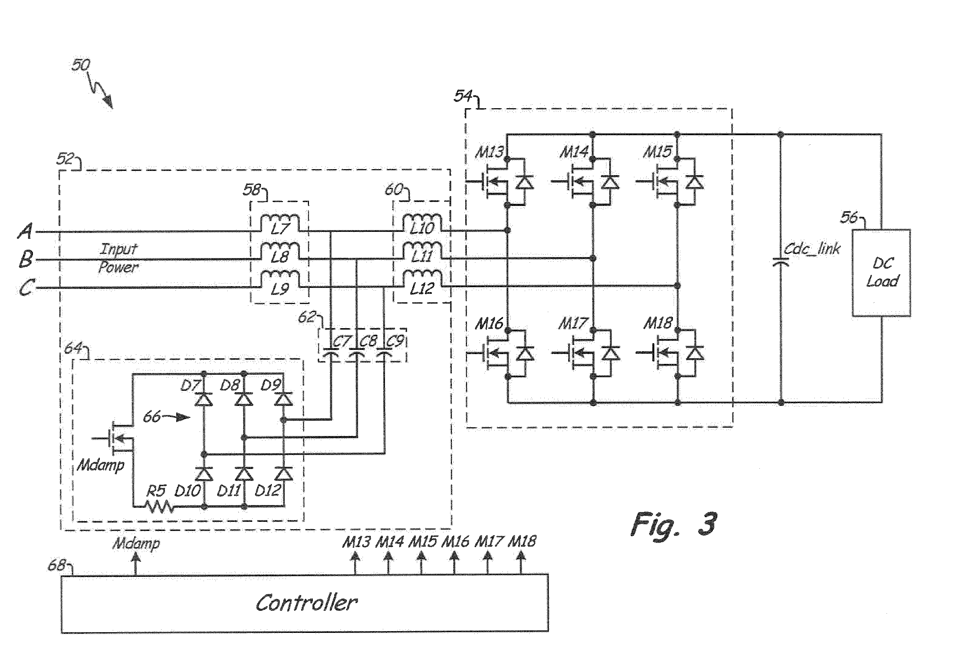

FIG. 3 is a circuit diagram of power conversion system 50 according to another embodiment of the present invention. Power conversion system includes filter circuit 52 and active rectifier 54 connected to convert a three-phase AC input (labeled 'A', 'B', and 'C') to a DC output that is provided to DC load 56. Filter circuit 52 includes filter inductor circuit 58, boost inductor circuit 60, filter capacitor circuit 62 and damping resistor circuit 64. Active rectifier 54 includes a plurality of solid-state switching devices M13, M14, M15, M16, M17 and M18, selectively turned On and Off by controller 68 to provided the desired AC-to-DC power conversion.

Filter circuit 52 is employed to filter undesirable oscillations generated on the AC input by active rectifier 54 and provide damping of the L-C-L network included in filter circuit 52. As described with respect to FIG. 2, filter circuit 52 is similarly configured in a L-C-L topology in which inductors L7, L8, L9 included in filter inductor circuit 58 are connected in series with inductors L10, L11, L12, respectively, of boost inductor circuit 60. Capacitors C7, C8, C9 of filter capacitor circuit 62 are connected to a node between filter inductor circuit 58 and boost inductor circuit 60. In other embodiments, other well-known filter topologies may be employed.

In the embodiment shown in FIG. 3, damping resistor circuit 64 includes damping resistor R5, solid-state switch M_{damp}, and rectifier circuit 66, which includes diodes D7, D8, D9, D10, D11, and D12. As described with respect to the embodiment shown in FIG. 2, rectifier circuit 66 includes a pair of diodes that act to rectify harmonics associated with each phase of the AC input to a DC output that is provided across damping resistor R5, For example, diodes D9 and D12 are connected via capacitor C7 to phase A of the AC input, at a node located between inductor L7 of filter inductor circuit 58 and inductor L10 of boost inductor circuit 60. Similarly, diodes D8 and D11 are connected via capacitor C8 to phase B of the AC input at a node located between inductor L8 of filter inductor circuit 58 and inductor L11 of boost inductor circuit 60, and diodes D7 and D10 are connected via capacitor C9 to phase C of the AC input at a node located between inductor L9 of filter inductor circuit 58 and inductor L12 of boost inductor circuit 60. Each pair of diodes rectifies the corresponding AC signal provided via one of the corresponding capacitors C7-C9 to provide a rectified output to resistor R5 to dampen oscillations associated with the AC input.

In the embodiment shown in FIG. 3, solid-state switch M_{damp} is additionally connected in series with resistor R5, with controller 68 connected to selectively control the state of solid-state switching device M_{damp}. When solid-state switch M_{damp} is On, damping resistor circuit 64 operates as discussed with respect to the embodiment shown in FIG. 2, in which harmonics associated with each phase of the AC input, provided via one of the corresponding capacitors C7-C9, is rectified and supplied to resistor R5, which acts to dampen undesirable oscillations (i.e., ringing of the L-C-L network). When solid-state switch M_{damp} is Off, an open-circuit is created in damping resistor circuit 64 that disconnects damping resistor circuit 64 and filter capacitor circuit 62 from the AC inputs. That is, by turning Off solid-state switch M_{damp}, there is no circuit path available between respective phases of the AC input, effectively disconnecting (electrically) filter capacitor circuit 62 and damping resistor circuit 64 from the AC inputs.

During start-up or power-up of active rectifier 54, when AC power is initially supplied, controller 68 turns solid-state switch M_{damp} Off to modify the power factor power conversion system 50. In particular, by turning off solid-state switch M_{damp}, the capacitance provided by filter capacitor circuit 62 is removed from filter circuit 52, causing a lagging input power factor to be provided by filter circuit 52, The leading power factor caused by filter capacitor circuit 62 is undesirable, for example, because it may upset the voltage regulation of the synchronous generator connected to provide AC input power to power conversion system 50. In the embodiment shown in FIG. 3, controller 68 controls the states of solid-state switch M_{damp}, selectively turning solid-state switch M_{damp} On and Off depending on whether power conversion system 50 is starting up or operating normally, In one embodiment, controller 68 may also be used to control the state of solid-state switches M13-M18 employed by active rectifier 54.

As discussed with respect to the embodiment described with respect to FIG. 2, a benefit of the embodiment provided in FIG. 3 is the ability to reduce the number of damping resistors required to by filter circuit 52 from one damping resistor per phase to one damping resistor for all phases. In addition, by adding solid-state switch M_{damp} to damping circuit 64, filter capacitor circuit 62 can be selectively removed from filter circuit 52 to provide a lagging input power factor that offsets the leading input power factor created during start-up of power conversion system 10.

In the embodiments described with respect to FIGS. 1 and 2, the topology of filter circuit 52 has included filter inductors, boost inductors, and filter capacitors connected in a particular configuration. In other embodiments, the topology of filter circuit 52 may be modified to employ other topologies. In addition, the rectifier circuit included as part of the damping circuit (e.g., damping circuit 44 in FIG. 2, damping circuit 64 in FIG. 3) may be implemented with other well-known rectifier topologies, and may include passive and/or active components (e.g., diodes and/or solid-state switches). For example, although the invention has been described with one type of filter circuit topology, other well-known filter circuit topologies may be employed in conjunction with the single damping resistor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A power conversion system for converting a multi-phase alternating current (AC) input to a direct current (DC) output, the power conversion system comprising:
input terminals (A, B, C) for receiving a multi-phase AC input;
output terminals for providing a DC output;
an active rectifier (34) connected to convert the multi-phase input received at the
input terminals to a DC output for provision to the output terminals; and
a multi-phase filter circuit (32) connected between the input terminals and the
active rectifier, the filter circuit including a damping circuit (44) connected between phases of the multi-phase AC input, the damping circuit including a rectifier (46) for rectifying the multi-phase AC input and a single damping resistor (R4) connected across the rectifier.

2. The power conversion system of claim 1, wherein the rectifier is a bridge rectifier that includes a pair of diodes (D1-D6) connected to each phase of the multi-phase AC input, each pair including a first diode having an anode connected to one phase of the multi-phase AC input and a cathode connected to the damping resistor, and a second diode having an anode connected to the damping resistor and a cathode connected to the same phase of the multi-phase AC input as the first diode.

3. The power conversion system of claim 1, wherein the multi-phase filter circuit includes a filter capacitor circuit (42) that includes at least one filter capacitor connected between each phase of the multi-phase AC input and the damping circuit.

4. The power conversion system of claim 3, wherein the damping circuit further includes:
a solid-state switch (M13-M18) connected in series with the damping resistor that
is selectively turned Off to disconnect the filter capacitor circuit and damping circuit from the multi-phase AC input and selectively turned On to connect the filter capacitor circuit and damping circuit to the multi-phase AC input.

5. The power conversion system of claim 4, wherein the solid-state switch is turned Off during start-up of the active rectifier and turned On during normal operation.

6. The power conversion system of claim 1, wherein the multi-phase filter circuit includes wit respect to each phase a filter inductor (38) , a boost inductor (40) and a filter capacitor (42), the filter inductor connected in series with the boost inductor and the filter capacitor connected between a node located between the filter inductor and the boost inductor and the damping circuit.

7. A filter circuit for providing filtering to a multi-phase AC input, the filter circuit comprising:
a filter inductor circuit (3 8) connected to the multi-phase AC input;
a boost inductor circuit (40) connected in series with the filter inductor circuit;
a filter capacitor circuit (42) connected at a first end between the filter inductor
circuit and the boost inductor circuit; and
a damping circuit (44) connected to a second end of the filter capacitor circuit, the
damping circuit including a rectifier circuit (46) that rectifies the multi-phase AC input and a single damping resistor (R4) that is connected across the rectifier circuit.

8. The filter circuit of claim 7, wherein the damping circuit includes a solid-state switch connected in series with the single damping resistor.

9. The filter circuit of claim 8, wherein the solid-state switch is turned Off to electrically disconnect the damping circuit and the filter capacitor circuit from the filter circuit and turned On to electrically connect the damping circuit and the filter capacitor circuit to the filter circuit.

10. The filter circuit of claim 7, wherein the rectifier circuit is a bridge rectifier that includes a pair of diodes (D1 - D6) connected to each phase of the multi-phase AC input, each pair including a first diode having an anode connected to one phase of the multi-phase AC input and a cathode connected to the damping resistor, and a second diode having an anode connected to the damping resistor and a cathode connected to the same phase of the multi-phase AC input as the first diode.
